# FASCICULE DE BREVET EUROPEEN

(11) **EP 1 133 819 B1**
(45) Date de publication et mention de la délivrance du brevet: **12.02.2003**
(21) Numéro de dépôt: 99956149.1
(22) Date de dépôt: 25.11.1999
(51) Int. Cl.: H02G 3/10

(54) **BOITIER POUR APPAREILLAGE A DISPOSER LE LONG D'UNE GOULOTTE, NOTAMMENT POUR APPAREILLAGE ELECTRIQUE**
GERÄTEGEHÄUSE ZUM AUF EINEN KABELKANALSEITE INSBESONDERE FÜR ELEKTRISCHES GERÄT EINBRINGEN
APPARATUS BOX TO BE ARRANGED ALONG A WIREWAY, IN PARTICULAR FOR ELECTRICAL APPARATUS

(30) Priorité: 27.11.1998 FR 9814942
(43) Date de publication de la demande: 19.09.2001
(73) Titulaire: LEGRAND, F-87000 Limoges (FR); LEGRAND SNC, F-87000 Limoges (FR)
(72) Inventeur: JARRY, Patrice, F-72140 Mont-Saint-Jean (FR); PALLIER, Michel, F-87000 Limoges (FR); BERNARDEAU, Patrick, F-87270 Chaptelat (FR)
(74) Mandataire: Remy, Fabienne
(86) Numéro de dépôt international: FR9902916
(87) Numéro de publication internationale: WO00033435

(56) Documents cités:
- EP-A- 0 633 639
- FR-A- 2 595 513

## Description

La présente invention concerne d'une manière générale l'implantation d'un quelconque appareillage, et, notamment, d'un quelconque appareillage électrique, le long d'une goulotte intervenant en saillie sur une quelconque paroi et assurant le logement et la protection des conducteurs ou autres canalisations assurant la desserte d'un tel appareillage.

Par goulotte, on entend ici, de manière usuelle, un conduit comportant, globalement, d'une part, un socle, par lequel il est adapté à être appliqué à la paroi concernée, et dont la section transversale est ouverte, et, d'autre part, un couvercle qui, pour la fermeture de ce socle, est dûment rapporté sur celui-ci, par exemple par encliquetage.

La présente invention vise plus particulièrement le cas où l'implantation d'un appareillage le long d'une goulotte se fait à la faveur d'un boîtier comportant, d'une part, un corps, qui, adapté à être rapporté sur la paroi à équiper, est apte à former un logement pour l'appareillage concerné, et qui, le long de celui de ses côtés par lequel il doit côtoyer la goulotte, présente une ouverture, et, d'autre part, un auvent, qui, s'étendant à compter du corps, en correspondance avec l'ouverture de celui-ci, est destiné à recouvrir localement la goulotte, transversalement par rapport à celle-ci, en s'étendant en pratique plus précisément sur le socle de cette goulotte, entre deux tronçons de son couvercle.

L'une des difficultés à surmonter dans la réalisation d'un boîtier de ce type tient à ce que les goulottes susceptibles d'être concernées peuvent avoir des largeurs, ou hauteurs, différentes.

Dans le brevet français qui, déposé le 10 mars 1986 sous le No 86 03334, a été publié sous le No 2 595 513, il est proposé, pour surmonter cette difficulté, de dissocier l'auvent du corps, et de l'engager plus ou moins dans ce corps en fonction de la largeur ou hauteur de la goulotte.

Mais, pour que la longueur de l'auvent éventuellement en surplus dans le corps n'interfère pas intempestivement avec les autres constituants présents dans celui-ci, il est nécessaire d'éliminer par découpe cette longueur en surplus, en tronçonnant l'auvent en conséquence, ce qui, à la pose, complique d'autant les opérations correspondantes.

Dans le brevet européen publié sous le No 0 633 639, l'auvent est amovible par rapport au corps, ce qui implique qu'à un auvent adapté à une largeur ou hauteur de goulotte peut être substitué un autre auvent adapté à une largeur ou hauteur de goulotte différente.

Mais cette disposition conduit à une multiplication dispendieuse des fabrications, au détriment des coûts.

La présente invention a d'une manière générale pour objet une disposition permettant d'éviter ces inconvénients.

De manière plus précise, elle a pour objet un boîtier pour appareillage à disposer le long d'une goulotte intervenant en saillie sur une quelconque paroi, ce boîtier étant du genre comportant, d'une part, un corps, qui, adapté à être rapporté sur cette paroi, est apte à former un logement pour l'appareillage concerné, et qui, le long de celui de ses côtés par lequel il doit côtoyer la goulotte, présente une ouverture, et, d'autre part, un auvent, qui, s'étendant à compter du corps, en correspondance avec l'ouverture de celui-ci, est destiné à recouvrir localement la goulotte, transversalement par rapport à celle-ci, et étant d'une manière générale caractérisé en ce que l'auvent est formé d'au moins deux parties distinctes, qui sont échelonnées en longueur sur la largeur ou hauteur de la goulotte, à savoir, à compter du corps, une partie fixe, qui est solidaire de ce corps, et au moins une partie mobile, qui, en prise avec la partie fixe, est ajustable en position par rapport à celle-ci.

Ainsi, il suffit d'ajuster en position la partie mobile de l'auvent par rapport à sa partie fixe pour adapter la longueur de cet auvent à la largeur ou hauteur de la goulotte à recouvrir.

Ce faisant, la longueur éventuellement en surplus de la partie mobile de l'auvent est avantageusement absorbée par la partie fixe de celui-ci, sans faire saillie dans le corps, et, donc, sans être susceptible d'interférer en quoi que ce soit avec les autres constituants présents dans ce dernier.

Préférentiellement, la partie mobile de l'auvent peut occuper l'une ou l'autre de deux positions déterminées par rapport à sa partie fixe, ces positions étant choisies pour correspondre aux largeurs ou hauteurs les plus courantes pour les goulottes susceptibles d'être concernées.

Ainsi, se trouve avantageusement évité tout tâtonnement dans le positionnement à assurer entre la partie mobile de l'auvent et sa partie fixe.

En outre, ce positionnement est avantageusement assurée de manière franche, au bénéfice de l'esthétique.

Préférentiellement, d'ailleurs, des moyens de positionnement sont prévus de manière positive entre la partie mobile de l'auvent et sa partie fixe, pour matérialiser les diverses positions possibles de cette partie mobile.

Par exemple, ces moyens de positionnement sont des moyens d'emboîtement, au bénéfice de la tenue de la partie mobile de l'auvent par rapport à sa partie fixe.

Les caractéristiques et avantages de l'invention ressortiront d'ailleurs de la description qui va suivre, à titre d'exemple, en référence aux dessins schématiques annexés sur lesquels :
la figure 1 est une vue en perspective d'un boîtier suivant l'invention ;
la figure 2 en est une vue en perspective éclatée ;
la figure 3 est, à échelle supérieure, une vue en perspective de la partie fixe de l'auvent que comporte ce boîtier, vue de dessous, suivant la flèche III de la figure 2 ;
la figure 4 est, en correspondance avec la figure 3, et à la même échelle que celle-ci, une vue en perspective de la partie mobile de cet auvent, vue de dessous, suivant la flèche IV de la figure 2.

Tel qu'illustré sur ces figures, et de manière connue en soi, il s'agit, globalement, de disposer, le long d'une goulotte 10 intervenant en saillie sur une quelconque paroi non représentée, un quelconque appareillage, également non représenté, en mettant en oeuvre, pour ce faire, un boîtier 11.

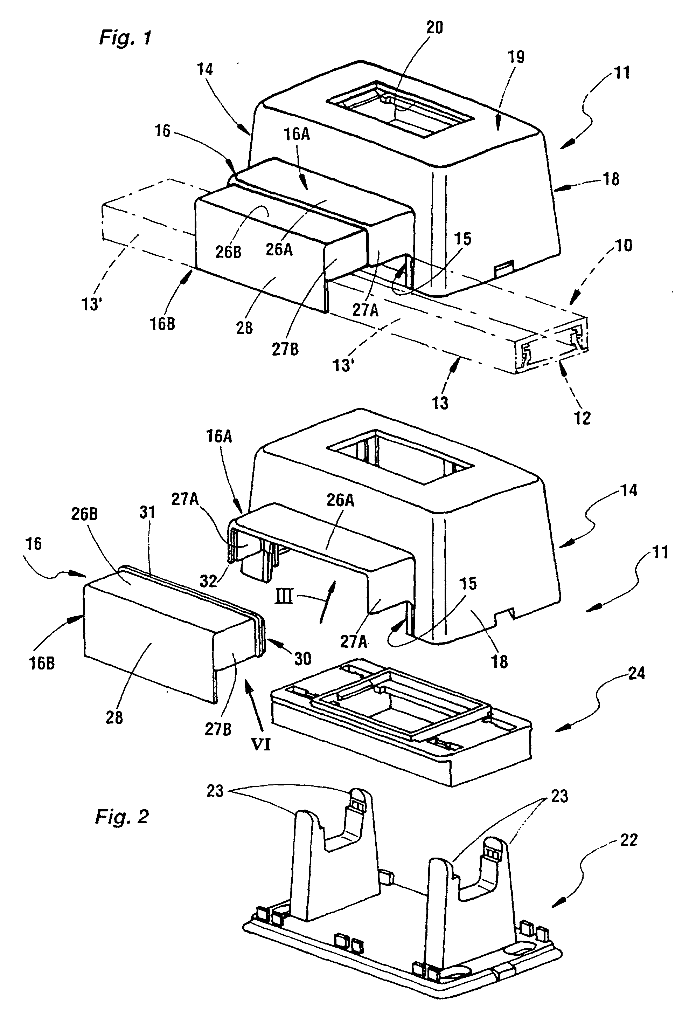

Bien que ne relevant pas, par elle-même, de la présente invention, la goulotte 10 a été schématisée, en traits interrompus, sur la figure 1.

Dans la forme de réalisation représentée, et de manière connue en soi, elle comporte, globalement, un socle 12, par lequel elle est adaptée à être rapportée sur la paroi à équiper, et dont la section transversale est ouverte, et un couvercle 13, qui, pour la fermeture de ce socle 12, est dûment rapporté sur celui-ci, par exemple par encliquetage.

Le boîtier 11 intervient entre deux tronçons 13' du couvercle 13.

De manière connue en soi, il comporte, globalement, d'une part, un corps 14, qui, adapté à être rapporté sur la paroi à équiper, le long de la goulotte 10, est apte à former un logement pour l'appareillage concerné, et, plus particulièrement, pour le mécanisme de cet appareillage, et qui, le long de celui de ses côtés par lequel il doit côtoyer la goulotte 10, présente une ouverture 15, et, d'autre part, un auvent 16, qui, s'étendant à compter du corps 14, en correspondance avec l'ouverture 15 de celui-ci, en ne concernant en pratique que la partie supérieure de cette ouverture 15, est destiné à recouvrir localement la goulotte 10, transversalement par rapport à celle-ci, en s'étendant en pratique sur le socle 12 de cette goulotte 10, entre les deux tronçons 13' de son couvercle 13.

Le corps 14 du boîtier 11 comporte, lui-même, globalement, une paroi latérale 18 et une paroi de façade 19.

Dans la forme de réalisation représentée, la paroi latérale 18 a, à titre d'exemple, une configuration globalement tronc-pyramidale, et la paroi de façade 19 présente, dans sa zone centrale, une ouverture 20, pour le passage de la portion de l'appareillage concerné, qui est laissée accessible à l'usager.

Par exemple, et tel que représenté, la paroi latérale 18 et la paroi de façade 19 sont d'un seul tenant, en formant conjointement une seule et même pièce en forme générale de cloche.

Mais, bien entendu, elles peuvent, en variante, appartenir à des pièces distinctes.

Les dispositions correspondantes étant bien connues par elles-mêmes, et ne relevant pas de la présente invention, elles ne seront pas décrites ici.

Dans la forme de réalisation représentée, et suivant des dispositions qui, ne relevant pas non plus de la présente invention, ne seront pas non plus décrites ici, le boîtier 11 se complète, d'une part, par une platine 22, qui est propre à permettre de rapporter l'ensemble sur la paroi à équiper, et qui présente en saillie quatre colonnettes 23, et, d'autre part, par un support d'appareillage 24, qui est destiné à recevoir le mécanisme de l'appareillage concerné, et qui est adapté à pouvoir venir s'encliqueter sur les colonnettes 23 de la platine 22, l'ensemble étant coiffé, et recouvert, par le corps 14.

Suivant l'invention, l'auvent 16 est formé d'au moins deux parties 16A, 16B distinctes, qui sont échelonnées en longueur sur la largeur ou hauteur de la goulotte 10, à savoir, à compter du corps 14, une partie 16A fixe, qui est solidaire de ce corps 14, et au moins une partie 16B mobile, qui, en prise avec la partie 16A fixe, est ajustable en position par rapport à celle-ci.

En pratique, dans la forme de réalisation représentée, l'auvent 16 ne comporte qu'une seule et unique partie 16B mobile.

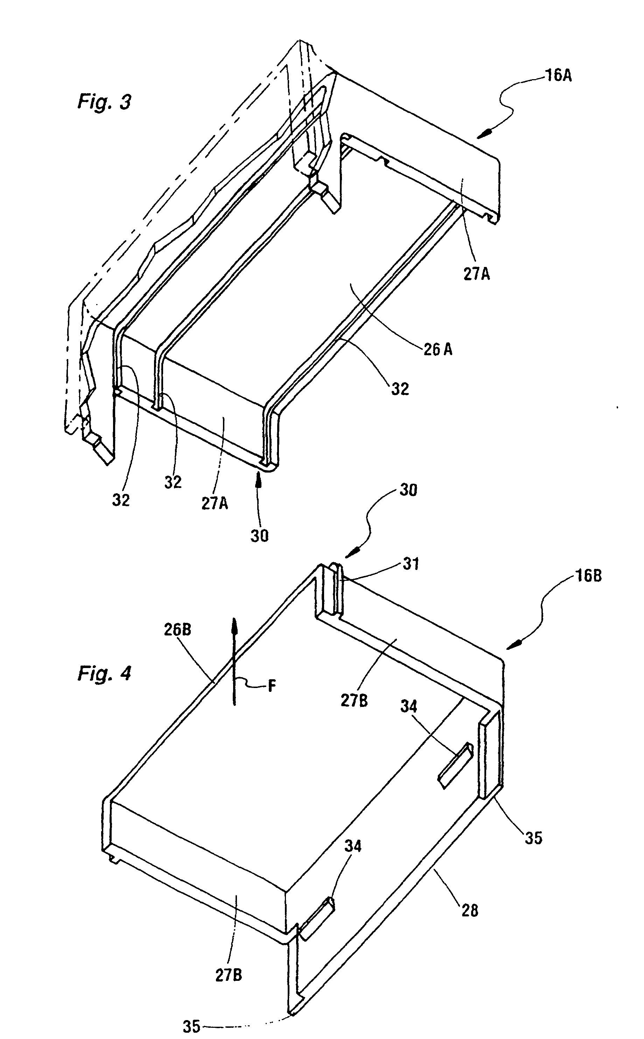

Dans la forme de réalisation représentée en traits continus sur les figures 1 et 2 et schématisée en traits interrompus sur la figure 3, qui est la forme de réalisation préférée de l'invention, la partie 16A fixe de l'auvent 16 forme une pièce qui, distincte du corps 14 du boîtier 11, est dûment rapportée sur ce corps 14.

Par exemple, cette partie 16A fixe de l'auvent 16 est amovible, pour que, à l'auvent 16, puisse être substitué, si désiré, un opercule occultant l'ouverture 15 du corps 14.

Les dispositions correspondantes étant bien connues par elles-mêmes, et ne relevant pas en propre de la présente invention, elles ne seront pas décrites ici.

En variante, la partie 16A fixe de l'auvent 16 peut, si désiré, être d'un seul tenant avec le corps 14, en formant une seule et même pièce avec la portion, au moins, de celui-ci, en l'espèce sa paroi latérale 18, dans laquelle est ménagée l'ouverture 15.

Dans l'un et l'autre cas, la partie 16A fixe de l'auvent 16 comporte, globalement, dans les formes de réalisation représentées, une paroi de façade 26A et deux parois latérales 27A.

La partie de façade 26A s'étend à niveau avec la partie supérieure de l'ouverture 15 du corps 14, et les parois latérales 27A s'étendent sur une fraction seulement de la hauteur de cette ouverture 15, pour laisser le passage à la goulotte 10 en dessous d'elles.

Préférentiellement, la longueur totale de la partie 16A fixe de l'auvent 16 à compter du corps 14 est choisie pour correspondre sensiblement à la largeur ou hauteur minimale pour les goulottes 10 susceptibles d'être concernées, tout en étant légèrement inférieure à cette largeur ou hauteur minimale compte tenu de la partie 16B mobile associée.

Dans les formes de réalisation représentées, la partie 16B mobile de l'auvent 16 est engagée dans sa partie 16A fixe.

Comme celle-ci, elle comporte une paroi de façade 26B et deux parois latérales 27B, mais elle se complète par une paroi frontale 28, et, pour recouvrir latéralement le socle 12 de la goulotte 10, celle-ci se prolonge au-delà des parois latérales 27B.

Par sa paroi de façade 26B, la partie 16B mobile de l'auvent 16 s'engage sous la paroi de façade 26A de la partie 16A fixe, sensiblement au contact de celle-ci, et, par ses parois latérales 27B, elle s'engage entre les parois latérales 27A de cette partie 16A fixe, sensiblement au contact de ces dernières.

Dans les formes de réalisation représentées, la partie 16B mobile de l'auvent 16 peut occuper l'une ou l'autre de plusieurs positions bien déterminées par rapport à sa partie 16A fixe.

Préférentiellement, et cela est le cas dans ces formes de réalisation, il est prévu, pour ce faire, des moyens de positionnement 30 entre la partie 16B mobile de l'auvent 16 et sa partie 16A fixe.

Par exemple, et tel que représenté, ces moyens de positionnement 30 sont des moyens d'emboîtement.

Plus précisément, dans les formes de réalisation représentées, les moyens de positionnement 30 comportent au moins une nervure 31, qui fait saillie sur l'une quelconque des parties 16A, 16B de l'auvent 16, transversalement par rapport à celle-ci, et au moins une rainure 32, qui est en creux sur l'autre de ces parties 16A, 16B, transversalement par rapport à celle-ci, et dont le profil transversal est au moins en partie complémentaire de celui de la nervure 31 précédente.

Dans les formes de réalisation représentées, la nervure 31 appartient à la partie 16B mobile de l'auvent 16, en s'étendant sur une portion au moins du profil transversal de celle-ci, et, conjointement, la rainure 32 appartient à la partie 16A fixe de cet auvent 16, en s'étendant sur une portion au moins du profil transversal de cette dernière, en correspondance avec la nervure 31 de la partie 16B mobile.

En pratique, la nervure 31 fait saillie sur la surface externe de la partie 16B mobile de l'auvent 16, et la rainure 32 est en creux sur la surface interne de sa partie 16A fixe.

Dans les formes de réalisation représentées, la nervure 31 s'étend sur la totalité du profil transversal de la partie 16B mobile de l'auvent 16, en affectant en continu tant sa paroi de façade 26B, sur toute la largeur de celle-ci, que ses parois latérales 27B, sur toute la hauteur de ces dernières, et, conjointement, la rainure 32 s'étend sur la totalité du profil transversal de la partie 16A fixe de cet auvent 16, en affectant en continu tant sa paroi de façade 26A, sur toute la largeur de celle-ci, que ses parois latérales 27A, sur toute la hauteur de ces dernières.

En pratique, la nervure 31 s'étend au voisinage du bord libre de la partie 16B mobile de l'auvent 16, et la partie 16A fixe de cet auvent 16 comporte plusieurs rainures 32, échelonnées, de place en place, sur sa longueur.

Enfin, dans les formes de réalisation représentées, la nervure 31 de la partie 16B mobile de l'auvent 16 a, en section transversale, un profil rectangulaire, et il en est de même pour les rainures 32 de la partie 16A fixe de cet auvent 16.

Par ailleurs, dans les formes de réalisation représentées, et ainsi qu'il est visible à la figure 4, la partie 16B mobile de l'auvent 16 comporte, intérieurement, en saillie sur sa paroi frontale 28, des nervures d'encliquetage 34, pour son crochetage sur le socle 12 de la goulotte 10.

Elle comporte, en outre, dans la zone d'angle de cette paroi frontale 28, pour des raisons qui apparaîtront ci-après, des portions de moindre épaisseur 35, qui s'étendent à compter de ses parois latérales 27B.

Au montage, la partie 16B mobile de l'auvent 16 est emboîtée, par sa nervure 31, dans l'une ou l'autre des rainures 32 de la partie 16A fixe de cet auvent 16, suivant un mouvement de translation qui, tel que schématisé par la flèche F sur la figure 4, est sensiblement perpendiculaire à sa paroi de façade 26B.

Bien entendu, la rainure 32 de la partie 16A fixe dans laquelle se fait cet emboîtement est choisie en fonction de la largeur ou hauteur de la goulotte 10 à recouvrir.

Comme schématisé à la figure 1, la paroi frontale 28 de la partie 16B mobile de l'auvent 16 vient alors sensiblement se plaquer latéralement contre le socle 12 de la goulotte 10, en continuité avec les tronçons 13' de son couvercle 13, en recouvrant ceux-ci par ses portions de moindre épaisseur 35.

Bien entendu, la présente invention ne se limite pas aux formes de réalisation décrites et représentées, mais englobe toute variante d'exécution.

En particulier, le nombre de parties de l'auvent peut être supérieur à deux, et, de l'une à l'autre de ces parties, la ou les nervures ou rainures éventuellement mises en oeuvre peuvent être interchangées.

On ne sortirait en outre pas du domaine de l'invention si, la tenue de la ou des parties mobiles de l'auvent étant assurée par ailleurs, un simple montage télescopique était prévu entre les diverses parties de cet auvent.

## Revendications

1. Boîtier pour appareillage à disposer le long d'une goulotte (10) intervenant en saillie sur une quelconque paroi, du genre comportant, d'une part, un corps (14), qui, adapté à être rapporté sur cette paroi, est apte à former un logement pour l'appareillage concerné, et qui, le long de celui de ses côtés par lequel il doit côtoyer la goulotte (10), présente une ouverture (15), et, d'autre part, un auvent (16), qui, s'étendant à compter du corps (14), en correspondance avec l'ouverture (15) de celui-ci, est destiné à recouvrir localement la goulotte (10), transversalement par rapport à celle-ci, **caractérisé en ce que** l'auvent (16) est formé d'au moins deux parties (16A, 16B) distinctes, qui sont échelonnées en longueur sur la largeur ou hauteur de la goulotte (10), à savoir, à compter du corps (14), une partie (16A) fixe, qui est solidaire de ce corps (14), et au moins une partie (16B) mobile, qui, en prise avec la partie (16A) fixe, est ajustable en position par rapport à celle-ci.

2. Boîtier suivant la revendication 1, **caractérisé en ce que** la partie (16B) mobile de l'auvent (16) peut occuper l'une ou l'autre de plusieurs positions bien déterminées par rapport à sa partie (16A) fixe.

3. Boîtier suivant l'une quelconque des revendications 1, 2, **caractérisé en ce qu'**il est prévu des moyens de positionnement (30) entre la partie (16B) mobile de l'auvent (16) et sa partie (16A) fixe.

4. Boîtier suivant la revendication 3, **caractérisé en ce que** les moyens de positionnement (30) sont des moyens d'emboîtement.

5. Boîtier suivant la revendication 4, **caractérisé en ce que** les moyens de positionnement (30) comportent au moins une nervure (31), qui fait saillie sur l'une quelconque des parties (16A, 16B) de l'auvent (16), transversalement par rapport à celle-ci, et au moins une rainure (32), qui est en creux sur l'autre de ces parties (16A, 16B), transversalement par rapport à celle-ci, et dont le profil transversal est au moins en partie complémentaire de celui de la nervure (31) précédente.

6. Boîtier suivant la revendication 5, **caractérisé en ce que** la nervure (31) appartient à la partie (16B) mobile de l'auvent (16), en s'étendant sur une portion au moins du profil transversal de celle-ci, et, conjointement, la rainure (32) appartient à la partie (16A) fixe de cet auvent (16), en s'étendant sur une portion au moins du profil transversal de cette dernière, en correspondance avec la nervure (31) de la partie (16B) mobile.

7. Boîtier suivant la revendication 6, **caractérisé en ce que** la nervure (31) s'étend sur la totalité du profil transversal de la partie (16B) mobile de l'auvent (16), et, conjointement, la rainure (32) s'étend sur la totalité du profil transversal de la partie (16A) fixe de cet auvent (16).

8. Boîtier suivant l'une quelconque des revendications 6, 7, **caractérisé en ce que** la nervure (31) s'étend au voisinage du bord libre de la partie (16B) mobile de l'auvent (16).

9. Boîtier suivant l'une quelconque des revendications 6 à 8, **caractérisé en ce que** la partie (16A) fixe de l'auvent (16) comporte plusieurs rainures (32), échelonnées, de place en place, sur sa longueur.

10. Boîtier suivant l'une quelconque des revendications 1 à 9, **caractérisé en ce que** la partie (16B) mobile de l'auvent (16) est engagée dans sa partie (16A) fixe.

11. Boîtier suivant les revendications 6 et 10, prises conjointement, **caractérisé en ce que** la nervure (31) fait saillie sur la surface externe de la partie (16B) mobile de l'auvent (16), et la rainure (32) est en creux sur la surface interne de sa partie (16A) fixe.

12. Boîtier suivant l'une quelconque des revendications 1 à 11, **caractérisé en ce que** la partie (16A) fixe de l'auvent (16) est d'un seul tenant avec le corps (14), en formant une seule et même pièce avec la portion, au moins, de celui-ci dans laquelle est ménagée son ouverture (15).

13. Boîtier suivant l'une quelconque des revendications 1 à 11, **caractérisé en ce que** la partie (16A) fixe de l'auvent (16) forme une pièce qui, distincte du corps (14), est dûment rapportée sur ce corps (14).

14. Boîtier suivant la revendication 13, **caractérisé en ce que** la partie (16A) fixe de l'auvent (16) est amovible.

15. Boîtier suivant l'une quelconque des revendications 1 à 14, **caractérisé en ce que** l'auvent (16) ne comporte qu'une seule et unique partie (16B) mobile.

16. Boîtier selon l'une quelconque des revendications 1 à 3, **caractérisé en ce qu'**il est prévu un montage télescopique entre les diverses parties de l'auvent.

## Claims

1. A casing for an apparatus to be disposed along a duct (10) arranged in projecting relationship on any wall, of the kind comprising on the one hand a body (14) which, being adapted to be fitted to said wall, is capable of forming a housing for the apparatus in question and which, along that one of its sides by way of which it is to border the duct (10), has an opening (15), and, on the other hand, a hood (16) which, extending from the body (14) in corresponding relationship with the opening (15) thereof, is intended to locally receive the duct (10) transversely with respect thereto, **characterised in that** the hood (16) is formed by at least two separate parts (16A, 16B) which are stepped in respect of length over the width or height of the duct (10), namely from the body (14) a fixed part (16A) which is fixed with respect to said body (14) and at least one movable part (16B) which, in engagement with the fixed part (A), is adjustable in position with respect thereto.

2. A casing according to claim 1 **characterised in that** the movable part (16B) of the hood (16) can occupy one or other of a plurality of positions which are clearly defined with respect to the fixed part (16A) thereof.

3. A casing according to either one of claims 1 and 2 **characterised in that** there are provided positioning means (30) between the movable part (16B) of the hood (16) and its fixed part (16A).

4. A casing according to claim 3 **characterised in that** the positioning means (30) are interlocking means.

5. A casing according to claim 4 **characterised in that** the positioning means (30) comprise at least one rib (31) which projects from either one of the parts (16A, 16B) of the hood (16) transversely with respect to said part, and at least one groove (32) which is recessed relationship in the other of said parts (16A, 16b) transversely with respect thereto and the transverse profile of which is at least partly complementary to that of the preceding rib (31).

6. A casing according to claim 5 **characterised in that** the rib (31) belongs to the movable part (16B) of the hood (16), extending over a portion at least of the transverse profile thereof and at the same time the groove (32) belongs to the fixed part (16A) of the hood (16) extending over a portion at least of the transverse profile of the fixed part in corresponding relationship with the rib (31) of the movable part (16B).

7. A casing according to claim 6 **characterised in that** the rib (31) extends over the whole of the transverse profile of the movable part (16B) of the hood (16) and at the same time the groove (32) extends over the whole of the transverse profile of the fixed part (16A) of the hood (16).

8. A casing according to either one of claims 6 and 7 **characterised in that** the rib (31) extends in the vicinity of the free edge of the movable part (16B) of the hood (16).

9. A casing according to any one of claims 6 to 8 **characterised in that** the fixed part (16A) of the hood (16) comprises a plurality of grooves (32) which are staggered at spaced positions over its length.

10. A casing according to any one of claims 1 to 9 **characterised in that** the movable part (16B) of the hood (16) is engaged into its fixed part (16A).

11. A casing according to claims 6 and 10 in combination **characterised in that** the rib (31) projects from the external surface of the movable part (16B) of the hood (16) and the groove (32) is in recessed relationship in the internal surface of its fixed part (16A).

12. A casing according to any one of claims 1 to 11 **characterised in that** the fixed part (16A) of the hood (16) is in one piece with the body (14), forming one and the same piece with the portion at least thereof in which its opening (15) is provided.

13. A casing according to any one of claims 1 to 11 **characterised in that** the fixed part (16A) of the hood (16) forms a piece which, being separate from the body (14), is appropriately fitted to the body (14).

14. A casing according to claim 13 **characterised in that** the fixed part (16A) of the hood (16) is removable.

15. A casing according to any one of claims 1 to 14 **characterised in that** the hood (16) comprises only one single movable part (16B).

16. A casing according to any one of claims 1 to 3 **characterised in that** a telescopic mounting is provided between the various parts of the hood.

## Patentansprüche

1. Gerätegehäuse, das längs eines auf einer beliebigen Wand vorstehenden Kabelkanals (10) anzuordnen ist, umfassend einerseits einen Körper (14), der dafür ausgelegt ist, an dieser Wand angebracht zu werden, eine Aufnahme für das betreffende Gerät bilden kann und längs derjenigen seiner Seiten, mit der er sich entlang dem Kanal (10) erstrecken soll, eine Öffnung (15) aufweist, und andererseits ein Vordach (16), das sich von dem Körper (14) aus in Entsprechung mit dessen Öffnung (15) erstreckt und dazu bestimmt ist, den Kanal (10) örtlich quer zu ihm abzudecken, **dadurch gekennzeichnet, daß** das Vordach von mindestens zwei getrennten Teilen (16A, 16B) gebildet ist, die in der Länge auf der Breite oder Höhe des Kanals (10) gestaffelt sind, und zwar, von dem Körper (14) aus, von einem feststehenden Teil (16A), der mit diesem Körper (14) fest verbunden ist, und von mindestens einem beweglichen Teil (16B), der mit dem feststehenden Teil (16A) in Eingriff ist und in seiner Stellung bezüglich dieses verstellbar ist.

2. Gehäuse nach Anspruch 1, **dadurch gekennzeichnet, daß** der bewegliche Teil (16B) des Vordachs (16) die eine oder die andere von mehreren genau bestimmten Stellungen bezüglich dessen feststehenden Teils (16A) einnehmen kann.

3. Gehäuse nach einem der Ansprüche 1, 2, **dadurch gekennzeichnet, daß** zwischen dem beweglichen Teil (16B) des Vordachs (16) und seinem feststehenden Teil (16A) Positionierungsmittel (30) vorgesehen sind.

4. Gehäuse nach Anspruch 3, **dadurch gekennzeichnet, daß** die Positionierungsmittel (30) Steckmittel sind.

5. Gehäuse nach Anspruch 4, **dadurch gekennzeichnet, daß** die Positionierungsmittel (30) mindestens eine Rippe (31) aufweisen, die an einem beliebigen der Teile (16A, 16B) des Vordachs (16) quer zu diesem vorsteht, sowie mindestens eine Nut (32), die auf dem anderen dieser Teile (16A, 16B) quer zu diesem vertieft vorgesehen ist und deren Profil mindestens teilweise zu dem der vorhergehenden Rippe (31) komplementär ist.

6. Gehäuse nach Anspruch 5, **dadurch gekennzeichnet, daß** die Rippe (31) zu dem beweglichen Teil (16B) des Vordachs (16) gehört, wobei sie sich über mindestens einen Teil dessen Querprofil erstreckt, und gleichzeitig die Nut (32) zu dem feststehenden Teil (16A) dieses Vordachs (16) gehört, wobei sie sich über mindestens einen Teil dessen Querprofil erstreckt, und zwar in Entsprechung mit der Rippe (31) des beweglichen Teils (16B).

7. Gehäuse nach Anspruch 6, **dadurch gekennzeichnet, daß** die Rippe sich über-das gesamte Querprofil des beweglichen Teils (16B) des Vordachs (16) erstreckt und gleichzeitig die Nut (32) sich über das gesamte Querprofil des feststehenden Teils (16A) dieses Vordachs (16) erstreckt.

8. Gehäuse nach einem der Ansprüche 6, 7, **dadurch gekennzeichnet, daß** die Rippe (31) sich in Nähe des freien Rands des beweglichen Teils (16B) des Vordachs (16) erstreckt.

9. Gehäuse nach einem der Ansprüche 6 bis 8, **dadurch gekennzeichnet, daß** der feststehende Teil (16A) des Vordachs (16) mehrere in Abständen auf seiner Länge gestaffelte Nuten (32) aufweist.

10. Gehäuse nach einem der Ansprüche 1 bis 9, **dadurch gekennzeichnet, daß** der bewegliche Teil (16B) des Vordachs (16) in dessen feststehenden Teil (16A) eingesteckt ist.

11. Gehäuse nach den Ansprüchen 6 und 10 zusammen, **dadurch gekennzeichnet, daß** die Rippe (31) auf der Außenfläche des beweglichen Teils (16B) des Vordachs (16) vorsteht und die Nut (32) auf der Innenseite seines feststehenden Teils (16A) vertieft ist.

12. Gehäuse nach einem der Ansprüche 1 bis 11, **dadurch gekennzeichnet, daß** der feststehende Teil (16A) des Vordachs (16) mit dem Körper (14) einstückig ausgeführt ist, indem er mindestens mit dessen Bereich, in dem seine Öffnung (15) vorgesehen ist, ein und dasselbe Teil bildet.

13. Gehäuse nach einem der Ansprüche 1 bis 11, **dadurch gekennzeichnet, daß** der feststehende Teil (16A) des Vordachs (16) ein vom Körper (14) getrenntes Teil bildet, das an diesem Körper (14) in geeigneter Weise befestigt ist.

14. Gehäuse nach Anspruch 13, **dadurch gekennzeichnet, daß** der feststehende Teil (16A) des Vordachs (16) abnehmbar ist.

15. Gehäuse nach einem der Ansprüche 1 bis 14, **dadurch gekennzeichnet, daß** das Vordach (16) nur einen einzigen beweglichen Teil (16B) besitzt.

16. Gehäuse nach einem der Ansprüche 1 bis 3, **dadurch gekennzeichnet, daß** zwischen den verschiedenen Teilen des Vordachs eine Teleskopmontage vorgesehen ist.
